# EUROPEAN PATENT SPECIFICATION

(11) **EP 4 641 560 B1**
(45) Date of publication and mention of the grant of the patent: **13.05.2026**
(21) Application number: 25170207.2
(22) Date of filing: 11.04.2025
(51) Int. Cl.: G10K 11/172

(54) **ACOUSTIC ATTENUATION PANEL**
SCHALLDÄMPFUNGSPLATTE
PANNEAU D'ATTÉNUATION ACOUSTIQUE

(30) Priority: 25.04.2024 US 202418645736
(43) Date of publication of application: 29.10.2025
(73) Proprietor: The Boeing Company, Arlington, VA 22202 (US)
(72) Inventor: DHANAPAL, Karthikeyan, Arlington, 22202 (US)
(74) Representative: Bryn-Jacobsen, Caelia

(56) References cited:
- EP-A1- 4 089 670
- CN-A- 110 588 683
- CN-A- 117 456 972
- CN-A- 117 916 800
- WINKLER JULIAN ET AL: "High fidelity modeling tools for engine liner design and screening of advanced concepts", vol. 20, no. 5-7, 24 August 2021 (2021-08-24), pages 530 - 560, XP093200986, ISSN: 1475-472X, Retrieved from the Internet <URL:http://journals.sagepub.com/doi/full-xml/10.1177/1475472X211023884> DOI: 10.1177/1475472X211023884
- YAN HONGYU ET AL: "Semi-self-similar fractal cellular structures with broadband sound absorption", APPLIED ACOUSTICS, ELSEVIER PUBLISHING, GB, vol. 217, 14 January 2024 (2024-01-14), XP087461255, ISSN: 0003-682X, [retrieved on 20240114], DOI: 10.1016/J.APACOUST.2024.109864
- LI ZHENDONG ET AL: "Ultra-broadband sound absorption of a hierarchical acoustic metamaterial at high temperatures", APPLIED PHYSICS LETTERS, AMERICAN INSTITUTE OF PHYSICS, 2 HUNTINGTON QUADRANGLE, MELVILLE, NY 11747, vol. 118, no. 16, 20 April 2021 (2021-04-20), XP012255822, ISSN: 0003-6951, [retrieved on 20210420], DOI: 10.1063/5.0044656
- MA XUQIANG ET AL: "Development of acoustic liner in aero engine: a review", SCIENCE CHINA TECHNOLOGICAL SCIENCES, vol. 63, no. 12, 11 August 2020 (2020-08-11), pages 2491 - 2504, XP037320039, ISSN: 1674-7321, DOI: 10.1007/S11431-019-1501-3
- SINGH PRABHJOT ET AL: "Metal-faced sandwich composite panels: A review", THIN-WALLED STRUCTURES, ELSEVIER, AMSTERDAM, NL, vol. 195, 17 November 2023 (2023-11-17), XP087450981, ISSN: 0263-8231, [retrieved on 20231117], DOI: 10.1016/J.TWS.2023.111376
- GUO JINGWEN ET AL: "Wideband low-frequency sound absorption by inhomogeneous multi-layer resonators with extended necks", COMPOSITE STRUCTURES, ELSEVIER SCIENCE LTD, GB, vol. 260, 6 January 2021 (2021-01-06), XP086488467, ISSN: 0263-8223, [retrieved on 20210106], DOI: 10.1016/J.COMPSTRUCT.2020.113538

## Description

### TECHNOLOGICAL FIELD

The present disclosure relates generally to the field of noise reduction devices and, more specifically, to noise reduction panels that include acoustic metamaterial members.

### BACKGROUND

Noise regulations limit the allowable noise levels for airports. These regulations limit the impact of aircraft noise on communities that are located near the airports. Various federal and local authorities establish the maximum allowable noise for a given time of the day. Normally, allowable noise levels are higher during the daytime and are reduced during evening and nighttime hours. Some airports have microphones installed around their grounds to monitor the noise levels. Monetary fines or other measures can be taken to enforce the regulations.

Aircraft are designed to reduce the amount of noise during operation. Some aircraft position noise reduction materials within the engines. However, these materials are relatively heavy and add weight to the aircraft thereby reducing the performance and fuel efficiency of the aircraft. Further, these materials are also relatively thick to particularly target higher frequency noise. These thicker materials are often difficult to design to effectively reduce the overall noise and the noise at certain frequencies. Further, the attachment of thicker materials within the engine can encroach on components of the engine. The thick materials can also interfere with the integration of the engine core mounted accessories.

Noise reduction measures are also used in other environments. One example includes a manufacturing facility that includes industrial equipment that produce high noise levels. Noise attenuation devices are used on the equipment and/or in the area surrounding the equipment in an attempt to reduce the noise levels. However, existing noise reduction measures have drawbacks and are not effective in attenuating the noise and/or have additional issues that make their use impractical.

Therefore, there is a need for noise reduction devices that attenuate noise and are able to be effectively designed and manufactured. For aircraft use, the devices should be configured to allow for use with an aircraft engine without interfering with the operation and also be relatively light weight. For other applications, the devices should be configured to be mounted in proximity to the source of the noise.

Winkler Julian et al: "High fidelity modeling tools for engine liner design and screening of advanced concepts", INTERNATIONAL JOURNAL OF AEROACOUSTICS, vol. 20, no. 5-7, 24 August 2021, in an abstract states that "With aircraft engines trending toward ultra-high bypass ratios, resulting in lower fan pressure ratios, lower fan RPM, and therefore lower blade pass frequency, the aircraft engine liner design space has been dramatically altered. This result is also due to the associated reduction in both the available acoustic treatment area (axial extent) as well as thickness (liner depth). As a consequence, there is current need for novel acoustic liner technologies that are able to meet multiple physical constraints and simultaneously provide enhanced noise attenuation capabilities. In addition, recent advances in additive manufacturing have enabled the consideration of complex liner backing structures that would traditionally be limited to honeycomb cores. This paper provides an overview of engine liner modeling and a description of the key physical mechanisms, with some emphasis on the use of low to high-fidelity tools such as empirical models and commercially available software such as COMSOL, Actran, and PowerFLOW. It is shown that the higher fidelity tools are a critical enabler for the evaluation and construction of future complex liner structures. A systematic study is conducted to predict the acoustic performance of traditional single degree of freedom liners and comparisons are made to experimental data. The effects of grazing flow and bias flow are briefly addressed. Finally, a more advanced structure, a metamaterial, is modeled and the acoustic performance is discussed."

CN117456972A in an abstract states that "The invention belongs to the technical field of aviation noise control, and particularly relates to a novel acoustic metamaterial structure for sound absorption, light weight and bearing, the novel acoustic metamaterial structure is formed by a plurality of unit cells through two-dimensional periodic continuation, and each unit cell comprises an upper wall plate (1), a middle wall plate (3) and a lower wall plate (4) which are arranged in parallel at equal intervals; the first vertical plate (2) and the second vertical plate (5) are arranged between the upper wall plate (1) and the lower wall plate (4) in a crossed mode, the upper wall plate (1), the middle wall plate (3), the lower wall plate (4), the first vertical plate (2) and the second vertical plate (5) form eight mounting grids, each mounting grid is internally provided with an eight-corner tetrahedral structure (6), and the structural unit achieves broadband, high sound absorption performance, high bearing capacity and the like. A new research thought is provided for the sound absorption bearing problem in the fields of aviation, aerospace, ships, rail transit and the like."

CN110588683A in an abstract states that "The invention discloses a composite board for low-frequency broadband noise reduction of a compartment structure, and belongs to the technical field of acoustic function materials for noise absorbing. A plurality of sound permeable holes are formed in a perforated plate. The perforated Plate, a local resonance plate and a back plate are arranged in parallel from inside to outside. A plurality of supporting plates are crossed transversely and longitudinally and are fixed between the perforated plate and a base plate of the local resonance plate and between the base plate of the local resonanceplate and the back plate. The base plate is divided by the plurality of supporting plates into a plurality of sound absorbing units. Each sound absorbing unit is internally provided with a film vibrator. Each film vibrator comprises a flexible polymer film and a central mass block. The flexible polymer films are fixedly connected with the base plate. The central mass blocks are attached to the centers of the flexible polymer films. The composite board can be conveniently installed in an engineering environment with strict volume requirements, the noise reduction effect is obvious, the bandwidth of the low-frequency sound absorbing section of the compartment structure can be widened, and low-frequency broadband noise reduction is realized."

Yan Hongyu et al: "Semi-self-similar fractal cellular structures with broadband sound absorption" APPLIED ACOUSTICS, ELSEVIER PUBLISHING, GB, vol. 217, 14 January 2024, in an abstract states that "Honeycomb core materials, recognized for their excellent sound absorption and load-bearing capabilities, are widely employed in engineering applications. The back cavity shape of honeycomb structure absorbers plays a crucial role in their sound absorption performance. In this study, the honeycomb structure absorbers are re-designed using fractal design principles, enabling a modification of the acoustic properties of traditional honeycomb-type absorbers and a significant enhancement in the sound absorption frequency band. The theoretical predictions of the semi-self-similar fractal honeycomb absorber structure are validated through finite element simulations and experimental studies, exhibiting remarkable consistency. The findings indicate that compared to single-layer first-order structures, the performance of dual-layer second-order fractal element Helmholtz resonators is significantly improved. Relative to conventional honeycomb panel structures, the fractal design approach markedly enhances the semi-absorption bandwidth of the absorbers, with an increase in the fractal order further broadening the sound absorption frequency band. The innovation of achieving broadband absorption through fractal resonators not only represents a new direction in the design of advanced honeycomb core materials but also holds substantial promise in the field of noise control."

Li Zhendong et al: "Ultra-broadband sound absorption of a hierarchical acoustic metamaterial at high temperatures", APPLIED PHYSICS LETTERS, AMERICAN INSTITUTE OF PHYSICS, 2 HUNTINGTON QUADRANGEL, MELVILLE, NY 11747, vol. 118, No. 16, 20 April 2021, in an abstract states that "We develop a hierarchical acoustic metamaterial with ultra-broadband sound absorption and promising applications at high temperatures as a super sound absorber. The proposed metamaterial is constructed through tailoring structural configurations by vertex-based hierarchy. The hierarchical design enables the acoustic metamaterial to achieve an excellent successive absorption spectrum in the low- to mid-frequency range from 0.58 kHz to 2.04 kHz in the first order and 0.64 kHz to 3.42 kHz in the second order, respectively. The sound absorption performance at high temperatures is predicted by means of theoretical and numerical approaches, and the models are validated by experimental measurements at room temperature. This work provides insight and opportunities into the role of structural hierarchy in designing acoustic metamaterials equipped with extraordinary absorption properties, illustrating an unprecedented capability of the hierarchical acoustic metamaterial."

Ma Xuqiang et al: "Development of acoustic liner in aero engine: a review", SCIENCE CHINA TECHNOLOGICAL SCIENCES, vol. 63, no. 12, 11 August 2020, in an abstract states that "Noise reduction for aircraft engine has attracted great concern due to the strict noise control regulation nowadays. Conventional perforated sheet-over-honeycomb acoustic liners have been widely used to attenuate turbofan engine noise. To dampen the broadband noise and resist the harsh service conditions with high temperature and pressure in modern turbofan engine, new acoustic liner concepts are proposed and evaluated in the latest decade. In this review, available studies regarding the recent development of liners are gathered. The paper starts with the introduction of acoustic absorption mechanism of local-reacting and extended-reacting liners. The progress of novel passive liners (e.g., mesh-cap liner, variable-depth liner, metal foam liner, hybrid liner, etc.) is summarized. Furthermore, adaptive liners with tunable geometry dimension or bias flow are illustrated in details. Metamaterial is also mentioned as a hot candidate in the next generation of acoustic liners. Finally, this review identifies benefits and some technical challenges with the goal of unveiling the potential of novel acoustic liner technologies in aero engine."

CN117916800A in an abstract states that "The invention relates to an acoustic metamaterial (100, 100 ') and a method of manufacturing the same. The acoustic metamaterial comprises a plurality of channels (101) or columns (101 '), each having a same cross-section with a hydraulic radius between 5 [mu] m and 300 [mu] m, arranged at periodic intervals (t, s) between 2 [mu] m and 600 [mu] m. This results in a high density network structure capable of providing optimized acoustic absorption and/or acoustic impedance over a wide frequency band. A method of manufacture thereof includes additive manufacturing by a plurality of successive steps of material deposition to form in each step a layer (203) comprising a plurality of periodically repeating cells (204) separated by walls (104). The layers (203) deposited in successive material deposition steps are stacked with their respective cells (204) aligned to form channels (101, 206 ')."

### SUMMARY

Aspects of the present disclosure are set out in the independent claim(s). Other aspects and features of the present disclosure are set out in the claims and the description below.

One aspect is directed to an acoustic attenuation panel to reduce noise that emanates from a source. The acoustic attenuation panel comprises a porous face layer, a back layer, and an intermediate section positioned between the face layer and the back layer. The intermediate section comprises a cellular member comprising a plurality of cavities and acoustic metamaterial members positioned in and extending across the cavities. The back layer is configured to be mounted to a surface in proximity to the source.

In another aspect, at least one of the acoustic metamaterial members is positioned in each of the cavities.

In another aspect, the acoustic metamaterial members are positioned within a central section of the cavities and are spaced away from each of the face layer and the back layer.

According to the invention, at least two of the acoustic metamaterial members are positioned in the cavities.

According to the invention, the at least two acoustic metamaterial members in the cavities are spaced apart.

In another aspect, each of the acoustic metamaterial members positioned in the cavities comprise different shapes.

In another aspect, a septum that is porous and extends across the cellular member between the face layer and the back layer and forms an upper section and a lower section of each of the cavities.

In another aspect, the acoustic metamaterial members are positioned in the upper section and the lower section of the cavities.

In another aspect, the acoustic attenuation panel is mounted on an engine nacelle of an aircraft.

In another aspect, the face layer, the back layer, and the intermediate section are flexible to enable the acoustic attenuation panel to be mounted on a curved surface of the aircraft.

In another aspect, the cavities and the acoustic metamaterial members comprise matching polygonal shapes to enable the acoustic metamaterial members to extend across an entirety of the cavities.

In another aspect, the acoustic metamaterial members are constructed from a polymer.

In another aspect, the cellular member comprises a honeycomb structure.

One aspect is directed to an acoustic attenuation panel to reduce noise that emanates from a source. The acoustic attenuation panel comprises a face layer, a back layer, and a cellular member positioned between the face layer and the back layer. The cellular member comprises a first side mounted to the face layer, a second side mounted to the back layer, cavities that extend through the cellular member with open faces at the first side and the second side, and acoustic metamaterial members connected to the cellular member and positioned in the cavities with the acoustic metamaterial members sized to extend across the cavities.

In another aspect, the cellular member comprises a honeycomb structure with the cavities comprising a polygonal sectional shape.

In another aspect, the acoustic metamaterial members comprise a matching sectional shape to the cavities.

In another aspect, the face layer and the back layer are constructed from one of metals and carbon fibers, and the acoustic attenuation panel constructed from a polymer.

One aspect is directed to a method of making an acoustic attenuation panel. The method comprises: positioning a cellular member in an orientation to access a plurality of cavities with the cellular member comprising a honeycomb structure with the plurality of cavities that extend through the cellular member; mounting acoustic metamaterial members in the cavities with outer edges of the acoustic metamaterials contacting against the honeycomb structure; mounting a face layer on a first side of the cellular member with the face layer spaced away from the acoustic metamaterial members; and mounting a back layer on a second side of the cellular member with the back layer spaced away from the acoustic metamaterial members.

In another aspect, the method further comprises mounting additional acoustic metamaterial members in the cavities of the cellular member.

In another aspect, the method further comprises mounting the back layer to a surface of an aircraft.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an aircraft.
Figure 2 is a partial cut-away perspective view of an engine that includes one or more acoustic attenuation panels mounted on the engine nacelle.
Figure 3 is a schematic diagram of a section of an acoustic attenuation panel.
Figure 4 is an exploded schematic diagram of the acoustic attenuation panel of Figure 3.
Figure 4A is an exploded view of an AMM member having an exactingly-designed structure.
Figure 5 is a schematic side view of an acoustic metamaterial member positioned within a cavity of a cellular member of an acoustic attenuation panel.
Figure 6 is a schematic side view of an acoustic metamaterial members positioned within a cavity of a cellular member of an acoustic attenuation panel.
Figure 7 is a schematic side view of a portion of acoustic attenuation panel having acoustic metamaterial members positioned within cavities of a cellular member.
Figure 8 is a schematic side view of a portion of acoustic attenuation panel having acoustic metamaterial members positioned within cavities of a cellular member.
Figure 9 is a flowchart diagram of a method of making an acoustic attenuation panel.

### DETAILED DESCRIPTION

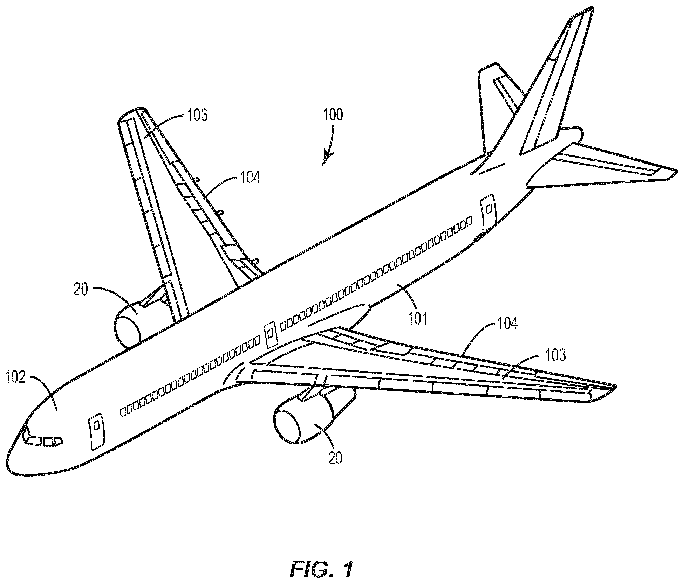

Figure 1 illustrates an aircraft 100 configured to transport passengers and/or cargo. The aircraft 100 generally includes a fuselage 101 with a flight deck 102 configured to accommodate flight personnel to control the aircraft. Engines 20 are mounted on the wings 103 on opposing sides of the fuselage 101. Flight control members 104 such as flaps are positioned on the wings 103 to control the flight.

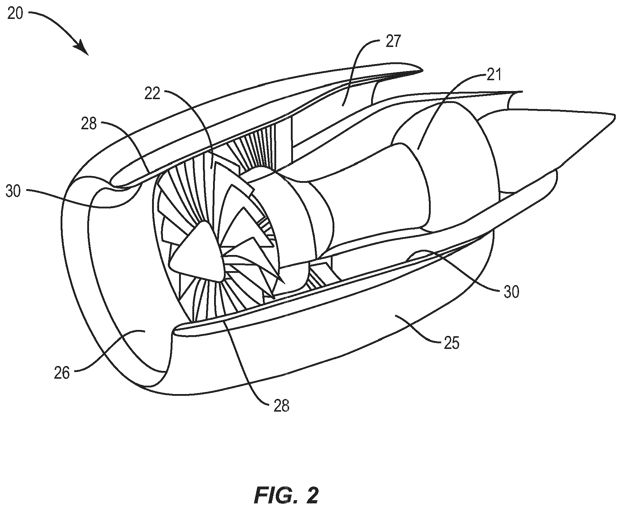

A variety of different engines 20 can power the aircraft 100. Examples include but are not limited to gas turbine engines and turbofan engines. Figure 2 is a partial cut-away view of the engine 20. The engine 20 includes an engine core 21 and a fan 22. A nacelle 25 extends around the engine core 21 and fan 22. The nacelle 25 includes an inlet 26 that directs the air to the engine core 21 and fan 22. A bypass duct 27 is formed between the engine core 21 and the nacelle 25. A portion of the air that enters the engine 20 at the inlet 26 passes the fan 23 and enters the engine core 21. The remainder of the air enters the bypass duct 27 that extends around the engine core 21.

One or more acoustic attenuation panels 30 are mounted to the inner wall 28 of the nacelle 25 to attenuate the noise produced by the engine 20. The acoustic attenuation panel 30 is positioned at various locations along the inner wall 28, including along one or more of the inlet 26 and the bypass duct 27. In some examples, the acoustic attenuation panel 30 extends completely around the inner wall 28 of the nacelle 25 and has a substantially annular shape. In other examples, the acoustic attenuation panel 30 extends around a limited portion of the inner wall 28 of the nacelle 25. This placement attenuates the radiated noise from one of both of the fan 22 and the engine core 21 (such as the noise caused by the turbine and combustor). In some examples, a single acoustic attenuation panel 30 is mounted to the inner wall 28. In other examples, two or more acoustic attenuation panels 30 are spliced together and mounted to the inner wall 28.

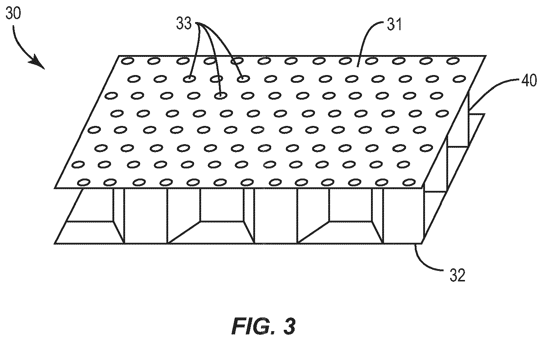

Figure 3 illustrates the acoustic attenuation panel 30 configured to be attached to the nacelle 25. The acoustic attenuation panel 30 includes different layers that work in combination to perform the noise attenuation. The acoustic attenuation panel 30 includes a porous top referred to as a face layer 31 that faces towards the source. In the context of the engine 20, the face layer 31 faces into the interior of the nacelle 25. An impervious bottom referred to a back layer 32 is configured to be attached to the inner wall 28 of the nacelle 25. An intermediate section 40 is positioned between the face layer 31 and the back layer 32. The intermediate section 40 is constructed from a number of different components arranged in one or more layers.

The face layer 31 is exposed and faces outward into the interior of the nacelle 25 when the acoustic attenuation panel 30 is mounted in the engine 20. The face layer 31 is perforated with openings 33 to enable sound waves to pass through and into the intermediate section 40. The face layer 31 can include different configurations with examples including but not limited to a perforate plate, a wire mesh and a felt-metal. The face layer 31 is constructed from various materials including but not limited to various metals and carbon fiber.

The back layer 32 is a solid member that prevents/reduces the passage of the sound waves and forms the back of the acoustic attenuation panel 30. The back layer 32 includes an outer surface configured to contact against the surface to which it is mounted. The back layer 32 can be constructed from various materials including but not limited to various metals and carbon fiber.

The intermediate section 40 is constructed to reduce noise within a frequency range. During use, the acoustic attenuation panel 30 is mounted with back layer 32 connected to or facing towards a surface, such as the inner wall 28 of an engine nacelle 25 or a panel in proximity to a manufacturing machine. The face layer 31 faces outward towards the source of the noise. The acoustic waves penetrate through the openings 33 of the face layer 31 and pass into the cavities 42. The acoustic energy is dissipated by the visco-thermal effect in the cavities 42.

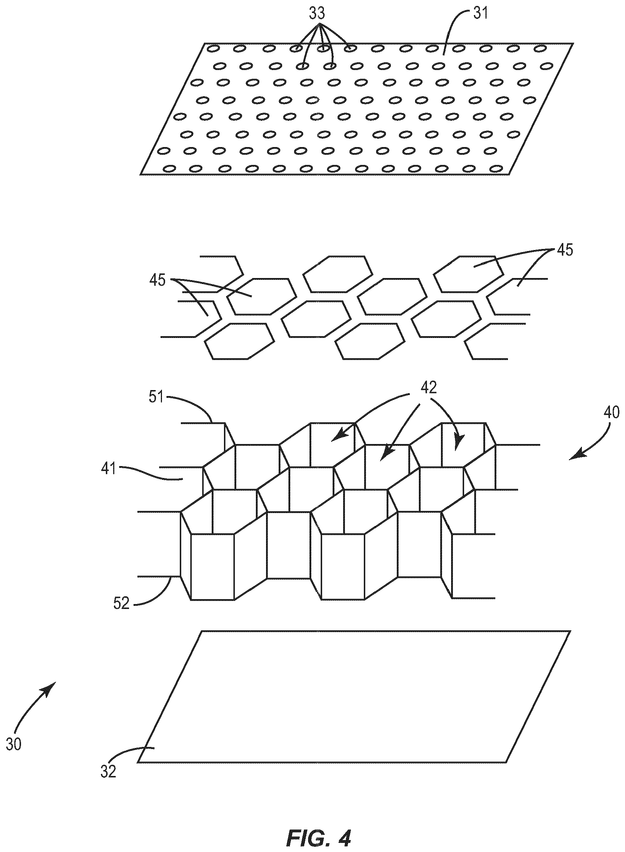

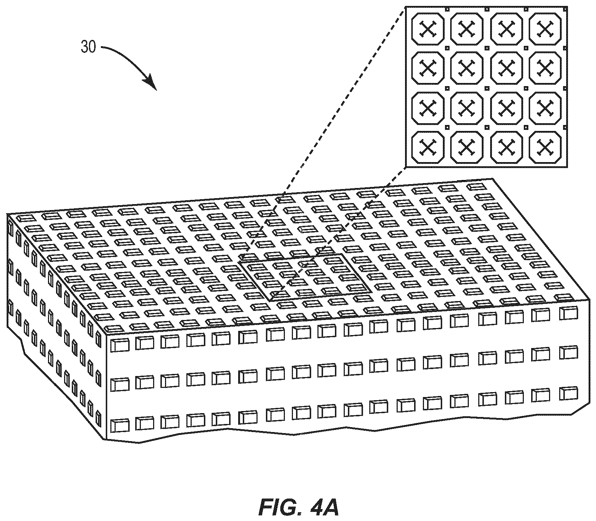

Figure 4 illustrates a schematic exploded view of the acoustic attenuation panel 30. The acoustic attenuation panel 30 includes the face layer 31 and the back layer 32. The intermediate section 40 includes a cellular member 41 and acoustic metamaterial (AMM) members 45. The AMM members 45 are sized to fit within cavities 42 of the cellular member 41. In some examples, the AMM members 45 are positioned in each of the cavities 42 of the cellular member 41. In other examples, the AMM members 45 are positioned in a limited number of cavities 42. In one example, the AMM members 45 are evenly distributed around the cellular member 41 with empty cavities 42 also evenly distributed around the cellular member 41. In some examples, the number of AMM members 45 and the number of empty cavities 42 is the same. In other examples, the number of AMM members 45 and empty cavities 42 is different.

The cellular member 41 includes a top side 51 and a bottom side 52. The top side 51 is mounted to the face layer 31 and the bottom side 52 is mounted to the back layer 32. The thickness of the cellular member 41 measured between the top side 51 and the bottom side 52 can vary. Cavities 42 extend through the cellular member 41 and are open at both the top side 51 and the bottom side 52.

In some examples as illustrated in Figure 4, the cellular member 41 has a honeycomb structure with the cavities 42 having polygonal sectional shapes. In other examples, the cavities 42 include different shapes such as but not limited to oval, circular, and irregular shapes. The cavities 42 throughout the cellular member 41 can have the same or different shapes and sizes. The shape and size of the cellular member 41 is designed to address one or more frequency bands of the noise. The cellular member 41 can be constructed from a variety of materials, including but not limited to aluminum and glass fiber.

The AMM members 45 are man-made materials designed to control, direct, and manipulate the sound waves that enter into the intermediate section 40. In some examples, the AMM members 45 are scaled to be smaller than the wavelength. AMM members 45 can be constructed from material including but not limited to polymers such as thermoplastic polyurethane (TPU). The AMM members 45 are included in the cavities 42 to control the sound waves through manipulating parameters such as the bulk modulus & density.

Figure 4A illustrates an example of an AMM member 45. The AMM members 45 gain their properties from their exactingly designed structures. These structures include but are not limited to the precise shape, geometry, size, orientation, and arrangement of the nanostructures.

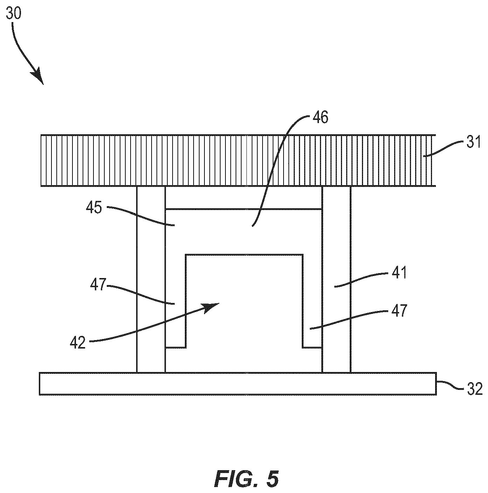

Figure 5 illustrates a section of an acoustic attenuation panel 30. A cellular member 41 is positioned between a face layer 31 and a back layer 32. An AMM member 45 is positioned within a cavity 42 of the cellular member 41. In this example, the AMM member 45 includes a top section 46 and legs 47. The top section 46 is shaped and sized to extend across the entirety of the cavity 42. In some examples, the outer edges of the top section 46 are attached to the walls of the cavity 42. The legs 47 extend outward from the top section 46 and are secured to the walls of the cavity 42. The AMM member 45 is positioned at a depth in the cavity 42 away from both the face layer 31 and the back layer 32. In some examples, all of the other cavities 42 in the acoustic attenuation panel 30 include a similar construction with an AMM member 45. In other examples, one or more of the cavities 42 is empty or include different and/or additional AMM members 45. In some examples, the AMM member 45 contacts against one or both of the face layer 31 and back layer 32.

Throughout the cellular member 41, the AMM members 45 can be positioned at the same or different depths within the cavities 42. In some examples, all of the other cavities 42 in the acoustic attenuation panel 30 include a similar construction of AMM members 45. In other examples, one or more of the cavities 42 is empty or include different and/or additional AMM members 45.

The AMM members 45 are sized to extend across the cavity 42. In some examples, the cavities 42 and the AMM members 45 include the same sectional shape and size. This enables the AMM members 45 to extend across and contact against the walls of the cavities 42. In one specific example, each of the cavities 42 and the AMM members 45 include polygonal sectional shapes.

The AMM members 45 can be mounted to the cellular member 41 in various manners. In some examples, the AMM members 45 and cellular member 41 are constructed in the same process and formed together, such as in an additive manufacturing process. In some examples, the intermediate section 40 is constructed with a 3D printing technology in which a honeycomb cellular member 41 and AMM members 45 are created simultaneously using two distinct nozzles and two different materials. Additionally or alternatively, the AMM members 45 are mounted with adhesives in the cavities 42.

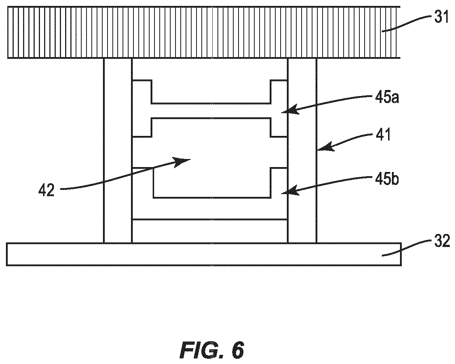

According to the invention, two or more AMM members 45 are positioned within a cavity 42. Figure 6 illustrates an example with a pair of AMM Members 45a, 45b mounted in the cavity 42. The AMM members 45a, 45b are spaced apart in the cavity 42 by a gap. Further, each of the two AMM members 45a, 45b are positioned away from the face layer 31 and the back layer 32. The AMM members 45 can include the same or different shapes and can be constructed from the same or different materials.

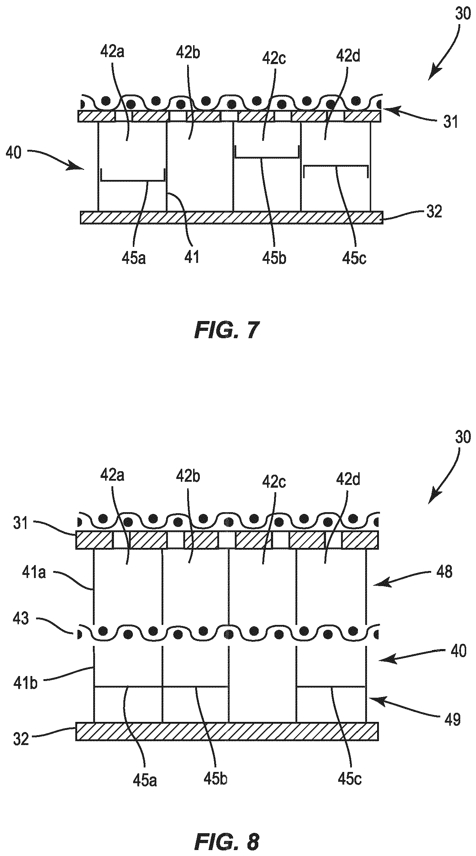

In some examples as illustrated in Figure 7, the acoustic attenuation panel 30 has a single degree of freedom (SDOF) that includes face layer 31, back layer 32, and intermediate cellular member 41. The cavities 42 are continuous between the face layer 31 and the back layer 32. In other examples as illustrated in Figure 8, the acoustic attenuation panel 30 has a double degree of freedom (DDOF) in which the cavities 42 are divided by a porous septum 43. In the example of Figure 8, the intermediate section 40 includes a first honeycomb layer 41a, a porous septum 43, and a second honeycomb layer 41b. An upper section 48 is formed between the face layer 31 and the septum 43, and a lower section 49 is formed between the septum 43 and back layer 32. AMM members 45 are positioned in one or both of the upper section 48 and lower section 49. The septum 43 is porous having openings to allow the sound waves to travel from the upper section 48 to the lower section 49. The septum 43 can be constructed from a variety of different materials, including but not limited to a perforate plate, a wire mesh and a felt-metal.

The acoustic attenuation panel 30 functions as a Helmholtz resonator. A SDOF design forms a single resonator. A DDOF design couples two Helmholtz resonators in series.

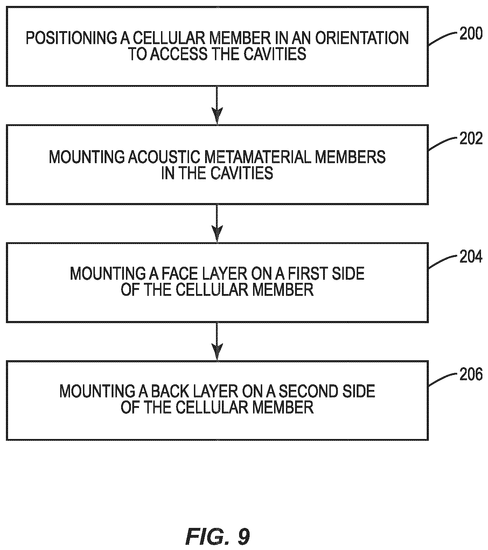

Figure 9 illustrates a flowchart of a method of making an acoustic attenuation panel 30. A cellular member 41 is positioned for processing (block 200). The cellular member 41 includes a honeycomb structure with through-extending cavities 42. AMM members 45 are mounted in the cavities 42 (block 202). Outer edges of the AMM members 45 contact against the honeycomb structure. A face layer 31 is mounted on a first side of the cellular member 41 (block 204). The face layer 31 is spaced away from the AMM members 45. A back layer 32 is mounted on a second side of the cellular member 41 (block 206). The back layer 32 spaced away from the AMM members 45.

The order of the various steps of making the acoustic attenuation panel 30 can vary. In some examples, the AMM members 45 are mounted to the cellular member 41 prior to mounting to either of the face layer 31 and the back layer 32. In other examples, the cellular member 41 is mounted to one of the face layer 31 and the back layer 32 prior to mounting the AMM members 45 in the cavities 42.

The acoustic attenuation panel 30 can include various thicknesses measured between the face layer 31 and the back layer 32. Examples include but are not limited to thicknesses ranging between 1-3 inches (1 inch = 2.54 cm).

The intermediate section 40 of the acoustic attenuation panel 30 is configured to be mounted to a variety of surfaces. In some examples, the acoustic attenuation panel 30 is flexible to enable mounting to flat surfaces as well as curved surfaces. In other examples, the acoustic attenuation panel 30 is rigid.

The acoustic attenuation panel 30 can be used to attenuate noise in a variety of different environments. In some examples, the acoustic attenuation panel 30 is mounted to the inner wall 28 of an engine nacelle 25 of an aircraft 100. In a specific example, the acoustic attenuation panel 30 is mounted to one or more of the inlet 26 and bypass duct 27. Other mounting positions on an aircraft 100 include but are not limited to the internal ducts of the engine 20, the trailing and side edges of the wings 103, and along one or more of the flight control members 104.

In another example, the acoustic attenuation panel 30 is mounted to other vehicles, such as but not limited to cars, trucks, boats, spacecraft, rockets, and drones.

In another example, the acoustic attenuation panel 30 is mounted within a manufacturing facility in proximity to a source of the noise. In some examples, the acoustic attenuation panel 30 is mounted to the interior or exterior of a machine that produces the noise. In some examples, the acoustic attenuation panel 30 is mounted to walls in the vicinity of the machine.

In some examples, the acoustic attenuation panel 30 is a single member shaped and sized to extend across the surface. In other examples, the acoustic attenuation panel 30 is constructed from two or more sections. The sections are abutted together and connected such as through adhesives and mechanical fasteners. In some examples, the different sections are spliced together. In one example in which the acoustic attenuation panel 30 is mounted within the engine nacelle 25 which has a cylindrical shape, different members are structurally joined together at a spline to form an overall annular shape that extends around the engine core 21 and fan 22.

The acoustic attenuation panel 30 provides for attenuating noise in a variety of different environments. The acoustic attenuation panel 30 is relatively light weight and thin to facilitate mounting at different locations. Further, the acoustic attenuation panel 30 is constructed in a manner to provide for quality noise attenuation. In one example in which the acoustic attenuation panel 30 is used on an aircraft 100, the panel achieves superior acoustical performance, including dramatic noise reduction during take-off and landing, with a relatively small increase in weight.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

## Claims

1. An acoustic attenuation panel to reduce noise that emanates from a source, the acoustic attenuation panel comprising:
a porous face layer (31);
a back layer (32);
an intermediate section (40) positioned between the face layer (31) and the back layer (32), the intermediate section (40) comprising:
a cellular member (41) comprising a plurality of cavities (42);
acoustic metamaterial members (45) positioned in and extending across the cavities (42); and
wherein the back layer (32) is configured to be mounted to a surface in proximity to the source; further comprising
at least two of the acoustic metamaterial members (45) positioned in the cavities (42);
wherein the at least two acoustic metamaterial members (45) in the cavities (42) are spaced apart by a gap.

2. The acoustic attenuation panel of claim 1, wherein at least one of the acoustic metamaterial members (45) is positioned in each of the cavities (42).

3. The acoustic attenuation panel of claim 1 or 2, wherein the acoustic metamaterial members (45) are positioned within a central section of the cavities (42) and are spaced away from each of the face layer (31) and the back layer (32).

4. The acoustic attenuation panel of claim 1, wherein each of the acoustic metamaterial members (45) positioned in the cavities (42) comprise different shapes.

5. The acoustic attenuation panel of any one of the preceding claims, further comprising a septum (43) that is porous and that extends across the cellular member (41) between the face layer (31) and the back layer (32) and forms an upper section and a lower section of each of the cavities (42).

6. The acoustic attenuation panel of claim 5, wherein the acoustic metamaterial members (45) are positioned in the upper section and the lower section of the cavities (42).

7. The acoustic attenuation panel of any one of the preceding claims, wherein the acoustic attenuation panel is mounted on an engine nacelle of an aircraft; and optionally
wherein the face layer (31), the back layer (32), and the intermediate section (40) are flexible to enable the acoustic attenuation panel to be mounted on a curved surface of the aircraft.

8. The acoustic attenuation panel of any one of the preceding claims, wherein the cavities (42) and the acoustic metamaterial members (45) comprise matching polygonal shapes to enable the acoustic metamaterial members (45) to extend across an entirety of the cavities (42).

9. The acoustic attenuation panel of any one of the preceding claim; wherein the acoustic metamaterial members (45) are constructed from a polymer.

10. The acoustic attenuation panel of any one of the preceding claims; wherein the cellular member (41) comprises a honeycomb structure.

11. The acoustic attenuation panel of claim 1; the cellular member (41) comprising:
a first side mounted to the porous face layer (31);
a second side mounted to the back layer (32);
wherein the cavities (42) extend through the cellular member (41) with open faces at the first side and the second side; and
acoustic metamaterial members (45) are connected to the cellular member (41) and sized to extend across the cavities (42).

12. The acoustic attenuation panel of claim 11, wherein the cellular member (41) comprises a honeycomb structure with the cavities (42) comprising a polygonal sectional shape.

13. The acoustic attenuation panel of claim 11 or 12, wherein the acoustic metamaterial members (45) comprise a matching sectional shape to the cavities (42); or optionally
further comprising:
the porous face layer (31) and the back layer (32) constructed from one of metals and carbon fibers; and
the acoustic attenuation panel constructed from a polymer.

14. A method of making an acoustic attenuation panel, the method comprising:
positioning a cellular member (41) in an orientation to access a plurality of cavities (42), the cellular member (41) comprises a honeycomb structure with the plurality of cavities (42) that extend through the cellular member (41);
mounting acoustic metamaterial members (45) in the cavities (42) with outer edges of the acoustic metamaterials contacting against the honeycomb structure; acoustic metamaterial members comprising at least two of the acoustic metamaterial members (45) positioned in the cavities (42); wherein the at least two acoustic metamaterial members (45) in the cavities (42) are spaced apart by a gap;
mounting a face layer (31) on a first side of the cellular member (41) with the face layer (31) spaced away from the acoustic metamaterial members (45); and
mounting a back layer (32) on a second side of the cellular member (41) with the back layer (32) spaced away from the acoustic metamaterial members (45).

15. The method of claim 14, further comprising mounting additional acoustic metamaterial members (45) in the cavities (42) of the cellular member (41); or optionally
further comprising mounting the back layer (32) to a surface of an aircraft.

## Patentansprüche

1. Schalldämpfungsplatte zum Reduzieren von Lärm, der von einer Quelle ausgeht, wobei die Schalldämpfungsplatte Folgendes umfasst:
eine poröse Deckschicht (31);
eine Rückschicht (32);
einen Zwischenabschnitt (40), der zwischen der Deckschicht (31) und der Rückschicht (32) positioniert ist,
wobei der Zwischenabschnitt (40) Folgendes umfasst:
ein zellulares Element (41), das mehrere Hohlräume (42) umfasst;
akustische Metamaterialelemente (45), die in den Hohlräumen (42) positioniert sind und sich über diese erstrecken; und
wobei die Rückschicht (32) dazu ausgelegt ist, an einer Oberfläche in der Nähe der Quelle montiert zu werden;
ferner umfassend
mindestens zwei der akustischen Metamaterialelemente (45), die in den Hohlräumen (42) positioniert sind;
wobei die mindestens zwei akustischen Metamaterialelemente (45) in den Hohlräumen (42) durch einen Spalt beabstandet sind.

2. Schalldämpfungsplatte nach Anspruch 1, wobei mindestens eines der akustischen Metamaterialelemente (45) in jedem der Hohlräume (42) positioniert ist.

3. Schalldämpfungsplatte nach Anspruch 1 oder 2, wobei die akustischen Metamaterialelemente (45) innerhalb eines zentralen Abschnitts der Hohlräume (42) positioniert sind und von sowohl der Deckschicht (31) als auch der Rückschicht (32) beabstandet sind.

4. Schalldämpfungsplatte nach Anspruch 1, wobei jedes der akustischen Metamaterialelemente (45), die in den Hohlräumen (42) positioniert sind, unterschiedliche Formen umfasst.

5. Schalldämpfungsplatte nach einem der vorhergehenden Ansprüche, ferner eine Zwischenwand (43) umfassend, die porös ist und sich über das zellulare Element (41) zwischen der Deckschicht (31) und der Rückschicht (32) erstreckt und einen oberen Abschnitt und einen unteren Abschnitt jedes der Hohlräume (42) bildet.

6. Schalldämpfungsplatte nach Anspruch 5, wobei die akustischen Metamaterialelemente (45) in dem oberen Abschnitt und dem unteren Abschnitt der Hohlräume (42) positioniert sind.

7. Schalldämpfungsplatte nach einem der vorhergehenden Ansprüche, wobei die Schalldämpfungsplatte an einer Triebwerksgondel eines Flugzeugs montiert ist; und gegebenenfalls
wobei die Deckschicht (31), die Rückschicht (32) und der Zwischenabschnitt (40) flexibel sind, um zu ermöglichen, dass die Schalldämpfungsplatte auf einer gekrümmten Oberfläche des Flugzeugs montiert werden kann.

8. Schalldämpfungsplatte nach einem der vorhergehenden Ansprüche, wobei die Hohlräume (42) und die akustischen Metamaterialelemente (45) übereinstimmende polygonale Formen umfassen, um zu ermöglichen, dass sich die akustischen Metamaterialelemente (45) über eine Gesamtheit der Hohlräume (42) erstrecken.

9. Schalldämpfungsplatte nach einem der vorhergehenden Ansprüche, wobei die akustischen Metamaterialelemente (45) aus einem Polymer aufgebaut sind.

10. Schalldämpfungsplatte nach einem der vorhergehenden Ansprüche, wobei das zellulare Element (41) eine Wabenstruktur umfasst.

11. Schalldämpfungsplatte nach Anspruch 1; wobei das zellulare Element (41) Folgendes umfasst:
eine erste Seite, die an der porösen Deckschicht (31) montiert ist;
eine zweite Seite, die an der Rückschicht (32) montiert ist;
wobei sich die Hohlräume (42) mit offenen Flächen an der ersten Seite und der zweiten Seite durch das zellulare Element (41) erstrecken; und
akustische Metamaterialelemente (45) mit dem zellularen Element (41) verbunden und so bemessen sind, dass sie sich über die Hohlräume (42) erstrecken.

12. Schalldämpfungsplatte nach Anspruch 11, wobei das zellulare Element (41) eine Wabenstruktur umfasst, wobei die Hohlräume (42) eine polygonale Querschnittsform umfassen.

13. Schalldämpfungsplatte nach Anspruch 11 oder 12, wobei die akustischen Metamaterialelemente (45) eine zu den Hohlräumen (42) passende Querschnittsform umfassen; oder gegebenenfalls
ferner umfassend:
die poröse Deckschicht (31) und die Rückschicht (32), die aus Metallen oder Kohlenstofffasern aufgebaut sind; und
die Schalldämpfungsplatte, die aus einem Polymer aufgebaut ist.

14. Verfahren zum Herstellen einer Schalldämpfungsplatte, das Verfahren Folgendes umfassend:
Positionieren eines zellularen Elements (41) in einer Ausrichtung, die Zugriff auf mehrere Hohlräume (42) ermöglicht, wobei das zellulare Element (41) eine Wabenstruktur mit den mehreren Hohlräumen (42) umfasst, die sich durch das zellulare Element (41) erstrecken;
Montieren akustischer Metamaterialelemente (45) in den Hohlräumen (42), wobei Außenkanten der akustischen Metamaterialien mit der Wabenstruktur in Kontakt stehen;
akustischer Metamaterialelemente, die mindestens zwei der akustischen Metamaterialelemente (45) umfassen, die in den Hohlräumen (42) positioniert sind; wobei die mindestens zwei akustischen Metamaterialelemente (45) in den Hohlräumen (42) durch einen Spalt beabstandet sind;
Montieren einer Deckschicht (31) auf einer ersten Seite des zellularen Elements (41), wobei die Deckschicht (31) von den akustischen Metamaterialelementen (45) beabstandet ist; und
Montieren einer Rückschicht (32) auf einer zweiten Seite des zellularen Elements (41), wobei die Rückschicht (32) von den akustischen Metamaterialelementen (45) beabstandet ist.

15. Verfahren nach Anspruch 14, das ferner das Montieren zusätzlicher akustischer Metamaterialelemente (45) in den Hohlräumen (42) des zellularen Elements (41) umfasst; oder gegebenenfalls
ferner Montieren der Rückschicht (32) an einer Oberfläche eines Flugzeugs umfasst.

## Revendications

1. Panneau d'atténuation acoustique destiné à réduire le bruit qui provient d'une source, le panneau d'atténuation acoustique comprenant :
une couche avant poreuse (31) ;
une couche arrière (32) ;
une section intermédiaire (40) positionnée entre la couche avant (31) et la couche arrière (32),
la section intermédiaire (40) comprenant :
un élément cellulaire (41) comprenant une pluralité de cavités (42) ;
des éléments en métamatériau acoustique (45) positionnés dans les cavités (42) et s'étendant à travers celles-ci ; et
dans lequel la couche arrière (32) est conçue pour être montée sur une surface à proximité de la source ;
comprenant en outre
au moins deux des éléments en métamatériau acoustique (45) positionnés dans les cavités (42) ;
dans lequel les au moins deux éléments en métamatériau acoustique (45) dans les cavités (42) sont espacés par un interstice.

2. Panneau d'atténuation acoustique de la revendication 1, dans lequel au moins un des éléments en métamatériau acoustique (45) est positionné dans chacune des cavités (42).

3. Panneau d'atténuation acoustique de la revendication 1 ou 2, dans lequel les éléments en métamatériau acoustique (45) sont positionnés à l'intérieur d'une section centrale des cavités (42) et sont espacés à la fois de la couche avant (31) et de la couche arrière (32).

4. Panneau d'atténuation acoustique de la revendication 1, dans lequel les éléments en métamatériau acoustique (45) positionnés dans les cavités (42) présentent chacun des formes différentes.

5. Panneau d'atténuation acoustique de l'une quelconque des revendications précédentes, comprenant en outre une cloison (43) qui est poreuse et qui s'étend à travers l'élément cellulaire (41) entre la couche avant (31) et la couche arrière (32) et forme une section supérieure et une section inférieure de chacune des cavités (42).

6. Panneau d'atténuation acoustique de la revendication 5, dans lequel les éléments en métamatériau acoustique (45) sont positionnés dans la section supérieure et la section inférieure des cavités (42).

7. Panneau d'atténuation acoustique de l'une quelconque des revendications précédentes, le panneau d'atténuation acoustique étant monté sur une nacelle moteur d'un aéronef ; et éventuellement
dans lequel la couche avant (31), la couche arrière (32) et la section intermédiaire (40) sont flexibles pour permettre le montage du panneau d'atténuation acoustique sur une surface incurvée de l'aéronef.

8. Panneau d'atténuation acoustique de l'une quelconque des revendications précédentes, dans lequel les cavités (42) et les éléments en métamatériau acoustique (45) présentent des formes polygonales correspondantes pour permettre aux éléments en métamatériau acoustique (45) de s'étendre à travers la totalité des cavités (42).

9. Panneau d'atténuation acoustique de l'une quelconque des revendications précédentes, dans lequel les éléments en métamatériau acoustique (45) sont construits à partir d'un polymère.

10. Panneau d'atténuation acoustique de l'une quelconque des revendications précédentes, dans lequel l'élément cellulaire (41) comprend une structure en nid d'abeilles.

11. Panneau d'atténuation acoustique de la revendication 1, l'élément cellulaire (41) comprenant :
un premier côté monté sur la couche avant poreuse (31) ; un deuxième côté monté sur la couche arrière (32) ;
dans lequel les cavités (42) s'étendent à travers l'élément cellulaire (41) avec des faces ouvertes au niveau du premier côté et du deuxième côté ; et
des éléments en métamatériau acoustique (45) sont reliés à l'élément cellulaire (41) et dimensionnés pour s'étendre à travers les cavités (42).

12. Panneau d'atténuation acoustique de la revendication 11, dans lequel l'élément cellulaire (41) comprend une structure en nid d'abeilles, les cavités (42) présentant une forme en coupe polygonale.

13. Panneau d'atténuation acoustique de la revendication 11 ou 12, dans lequel les éléments en métamatériau acoustique (45) présentent une forme en coupe adaptée aux cavités (42) ; ou éventuellement
comprenant en outre :
la couche avant poreuse (31) et la couche arrière (32) construites à partir soit de métaux, soit de fibres de carbone ; et
le panneau d'atténuation acoustique construit à partir d'un polymère.

14. Procédé de fabrication d'un panneau d'atténuation acoustique, le procédé comprenant :
le positionnement d'un élément cellulaire (41) dans une orientation permettant d'accéder à une pluralité de cavités (42), l'élément cellulaire (41) comprenant une structure en nid d'abeilles avec la pluralité de cavités (42) qui s'étendent à travers l'élément cellulaire (41) ;
le montage d'éléments en métamatériau acoustique (45) dans les cavités (42) avec des bords externes des métamatériaux acoustiques en contact avec la structure en nid d'abeilles, les éléments en métamatériau acoustique comprenant au moins deux des éléments en métamatériau acoustique (45) positionnés dans les cavités (42), les au moins deux éléments en métamatériau acoustique (45) dans les cavités (42) étant espacés par un interstice ;
le montage d'une couche avant (31) sur un premier côté de l'élément cellulaire (41) avec la couche avant (31) espacée des éléments en métamatériau acoustique (45) ; et
le montage d'une couche arrière (32) sur un deuxième côté de l'élément cellulaire (41) avec la couche arrière (32) espacée des éléments en métamatériau acoustique (45).

15. Procédé de la revendication 14, comprenant en outre le montage d'éléments en métamatériau acoustique supplémentaires (45) dans les cavités (42) de l'élément cellulaire (41) ; ou éventuellement
comprenant en outre le montage de la couche arrière (32) sur une surface d'un aéronef.
